# EUROPEAN PATENT APPLICATION

(11) **EP 3 279 460 A1**
(43) Date of publication of application: **07.02.2018**
(21) Application number: 17184288.3
(22) Date of filing: 01.08.2017
(51) Int. Cl.: F02M 26/67, F16H 1/10

(54) **EXHAUST GAS RECIRCULATION VALVE HAVING CROWNED SPLINE**

(30) Priority: 01.08.2016 US 201615225723
(71) Applicant: G.W. Lisk Company, Inc., Clifton Springs, New York 14432 (US)
(72) Inventor: Clapham, Shawn, Canandaigua, NY 14424 (US)
(74) Representative: Flügel Preissner Schober Seidel

(57) **Abstract**

An exhaust gas recirculation valve assembly (102) having a butterfly valve (104) for selectively controlling the flow of exhaust gas includes a splined interface (117) with an actuator (106), wherein the splined interface (117) includes crowned splines (119). The crowned splines (119) can be formed on a valve shaft (110) of the butterfly valve (104), wherein an engaging sleeve includes a corresponding surface. The crowned splines (119) accommodate variances in alignment between the valve shaft (110) and the actuator (106), thereby improving an operating life of the valve assembly (102).

## Description

### BACKGROUND OF THE INVENTION

### FIELD OF THE INVENTION

The present disclosure relates to valves and particularly to exhaust gas recirculation valves and more particularly to an exhaust gas recirculation valve including a butterfly valve attached to a valve shaft with crowned splines for being selectively rotated by an actuator.

### DESCRIPTION OF RELATED ART

Exhaust gas from an internal combustion engine can be used to alter the operating parameters of the engine. The flow of exhaust gas is controlled through valves within or exposed to the exhaust system of the engine. Exhaust gas emissions can be lowered though the use of exhaust gas recirculation (EGR) to recirculate a portion of the exhaust gas to the air intake steam. EGR valves provide for a reduction in the formation of nitrogen oxides (NOₓ) during combustion by redirecting a portion of the exhaust gas to the air intake system of the engine. The recirculated exhaust gas is mixed with incoming fresh air, resulting in a lower combustion temperature, which reduces or limits the production of NOₓ.

As the EGR valve is exposed to exhaust flow for extended periods, wherein the velocity of the exhaust flow can vary substantially, the EGR valve must withstand significant stress.

The need exists for an EGR valve that can accommodate the intended operating environment as well as manufacturing tolerances without experiencing excessive wear or deterioration that can lead to failure or a material reduction in performance characteristics.

### BRIEF SUMMARY OF THE INVENTION

In view of the foregoing, it is an object of the present disclosure to provide an exhaust gas recirculation valve assembly with improved resilience.

A first exemplary embodiment of the present disclosure provides an exhaust gas recirculation valve assembly including a housing having an exhaust passage for passing engine exhaust; a valve shaft rotatably mounting to the housing for rotation relative to the housing, the valve shaft including a plurality of radially extending crowned splines; and a valve body attached to the valve shaft to rotate with the valve shaft within the exhaust passage to vary occlusion of the exhaust passage.

A second exemplary embodiment of the present disclosure provides an exhaust gas recirculation valve assembly including a housing having an exhaust passage for passing engine exhaust; a valve shaft rotatably mounting to the housing for rotation relative to the housing, the valve shaft carrying a valve body; a drive shaft; and a splined interface between the valve shaft and the drive shaft, one of the valve shaft and the drive shaft including a plurality of projecting crowned splines and a remaining one of the valve shaft and the drive shaft including a sleeve having an engaging surface for cooperatively engaging the plurality of crowned splines.

A third exemplary embodiment of the present disclosure provides for an exhaust gas recirculation valve assembly including a housing having an exhaust passage for passing engine exhaust; a valve shaft rotatably mounting to the housing for rotation relative to the housing, the valve shaft having an inner section located within the exhaust passage and an outer section located outside the exhaust passage, the outer section including one of a plurality of radially outwardly extending crowned splines and a sleeve having a plurality of radially inwardly extending splines; a valve body attached to the valve shaft to rotate with the valve shaft within the exhaust passage to vary occlusion of the exhaust passage; and a drive shaft having a remaining one of the plurality of radially outwardly extending crowned splines and the sleeve having a plurality of radially inwardly extending splines to define a splined interface for imparting a rotation of the drive shaft to the valve shaft.

The following will describe embodiments of the present disclosure, but it should be appreciated that the present disclosure is not limited to the described embodiments and various modifications of the invention are possible without departing from the basic principle. The scope of the present disclosure is therefore to be determined solely by the appended claims.

### BRIEF DESCRIPTION OF THE SEVERAL VIEWS OF THE DRAWING(S)

FIG. 1 presents an exemplary valve assembly suitable for use in practicing exemplary embodiments of the present disclosure.
FIG. 2 presents another exemplary valve assembly suitable for use in practicing exemplary embodiments of the present disclosure.
FIG. 3 presents a cross sectional view of an exemplary valve assembly suitable for use in practicing exemplary embodiments of the present disclosure.
FIG. 4 presents an exemplary shaft suitable for use in practicing exemplary embodiments of the present disclosure.
FIG. 5 presents a close-up view of the end portion of an exemplary shaft suitable for use in practicing exemplary embodiments of the present disclosure.

### DETAILED DESCRIPTION OF THE INVENTION

Exemplary embodiments of the present disclosure provide an exhaust gas recirculation (EGR) valve assembly. While the valve described herein can have a variety of configurations, (e.g., a sliding valve, a poppet valve, or a valve-in-bore system) for purposes of this disclosure, the present system is set forth in terms of an EGR valve operable to rotate between a flow position and a no-flow or flow restricting position. This includes quarter turn valves, wherein a representative valve configuration is a butterfly valve.

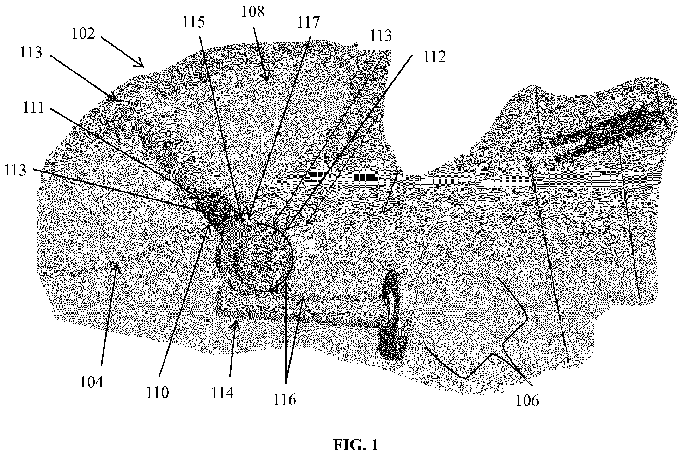

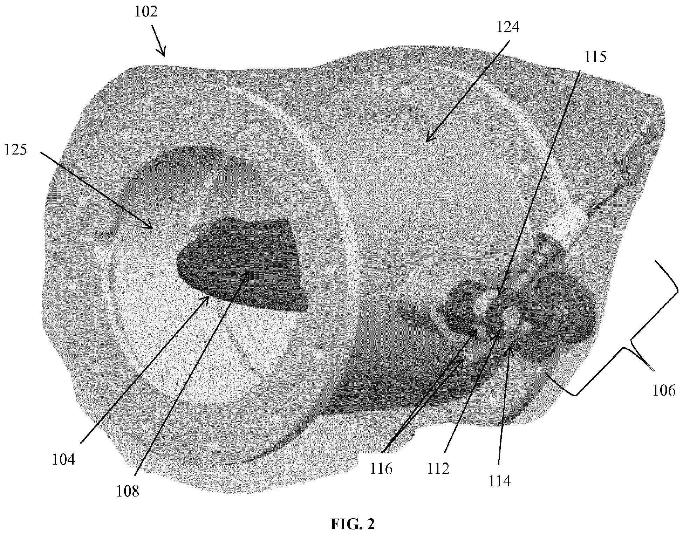

Referring to FIGs. 1 and 2, illustrated is EGR valve assembly 102, which includes a housing 124 (shown in FIG. 2), a butterfly valve assembly 104 and an actuator 106.

The housing 124 defines an exhaust passage 125 (shown in FIG. 2) for passing engine exhaust. The exhaust passage 125 has an inlet and an outlet. Although the exhaust passage 125 can have any of a variety of cross section profiles, for purposes of description, the cross section profile is set forth as circular.

The housing 124 includes a pair of opposing bearings intermediate the inlet and the outlet. The bearings can be integral with the housing or an insert to the housing or affixed to the housing.

The butterfly valve assembly 104 includes a valve body 108 and a valve shaft 110, wherein the valve body 108 is attached to the valve shaft 110 for rotation with the valve shaft 110.

The valve body 108 of the butterfly valve assembly 104 includes wall contact type valve bodies and 90-degree closing type valve bodies. The wall contact type valve body can include an elliptical valve plate (as depicted in FIG. 1) that is placed on the valve shaft 110 in bore 111. The valve body 108 is then rotated about the axis of the valve shaft 110, so that flow restriction is a function of rotation. In a closed position, the valve body 108 contacts the wall of the exhaust passage 125.

The valve body 108 of the 90-degree closing type butterfly valve assembly 104 employs a round valve plate (as shown in Fig. 1) having a diameter that is slightly smaller than a diameter of the exhaust passage 125. The valve body 108 rotates about a centerline of the bore 111. In its closed position, the valve body 108 is perpendicular to the exhaust flow through exhaust passage 125.

Thus, the valve body 108 is a plate or disk attached to the valve shaft 110, wherein the valve body 108 can be substantially parallel or perpendicular to the flow through the exhaust passage 125.

The valve body 108 can be symmetrically attached to the valve shaft 110 or have a planar offset, depending on the desired operating characteristics. That is, the axis of rotation of the valve shaft 110 can lie in a plane of the valve body 108. Alternatively, the axis of rotation of the valve shaft 110 can be spaced or offset from the plane of the valve body 108. Similarly, the valve shaft 110 can lie in the plane of the valve body 108 and pass through a centroid or line of symmetry of the valve body 108. Alternatively, the valve shaft 110 can lie in the plane of the valve body 108 and can have an asymmetric offset from the centroid or line of symmetry of the valve body 108. The asymmetric offset configuration provides for the generation of a moment force on the flow side for closing the valve body 108. On the flow side for opening the valve 104, less area on the armature is exposed. Thus, the force required for opening the valve 104 is decreased. The net moment force is greater on the flow side for closing the valve 104, thereby enhancing sealing. It is understood the selection and amount of offset is a design parameter and within the scope of the present system.

The valve shaft 110 is rotatably mounted to opposing bearings 113 for rotation relative to the housing 124 about a longitudinal axis of the valve shaft 110. It is understood, the valve shaft 110 can carry the bearings 113, which then provide the interface to the housing 124. In one configuration, the valve shaft 110 is transverse to the exhaust passage 125. However, it is understood the longitudinal axis of the valve shaft 110 can be inclined relative to the exhaust passage 125.

The valve shaft 110 is rotated about the longitudinal axis to vary the orientation of the valve body 108 in the exhaust passage 125, thereby controlling or regulating the flow of exhaust gas through the exhaust passage 125.

The valve shaft 110 is selectively rotated by the actuator 106. That is, the actuator 106 imparts a rotation to, or drives the valve shaft 110. The actuator 106 can include any of a variety of mechanisms including servos, hydraulic servos, solenoids and stepper motors. For purposes of this disclosure, the actuator 106 includes or provides the motive force to a drive shaft 115, which in turn imparts rotation to the valve shaft 110. In those configurations employing a hydraulic actuator, it is understood a control valve, including a spool valve can be employed to impart rotation of the valve shaft 110. It is further understood the actuator 106 can include a solenoid wherein the control valve is biased to provide the EGR valve 102 to function as a proportional valve.

The present system can employ the actuator 106 to rotate the valve shaft 110, which in turn positions the butterfly valve 104 to control the amount of exhaust flow, and exhibit a proportional, or linear response over their entire range of valve-opening positions. In some configurations, an electronic component is employed for adjustment in controlling the flow of the exhaust gas. The electronic component may trigger actuation of the valve 102 based on sensed engine operating parameters such as but not limited to, engine temperature, oil pressure or engine rpm.

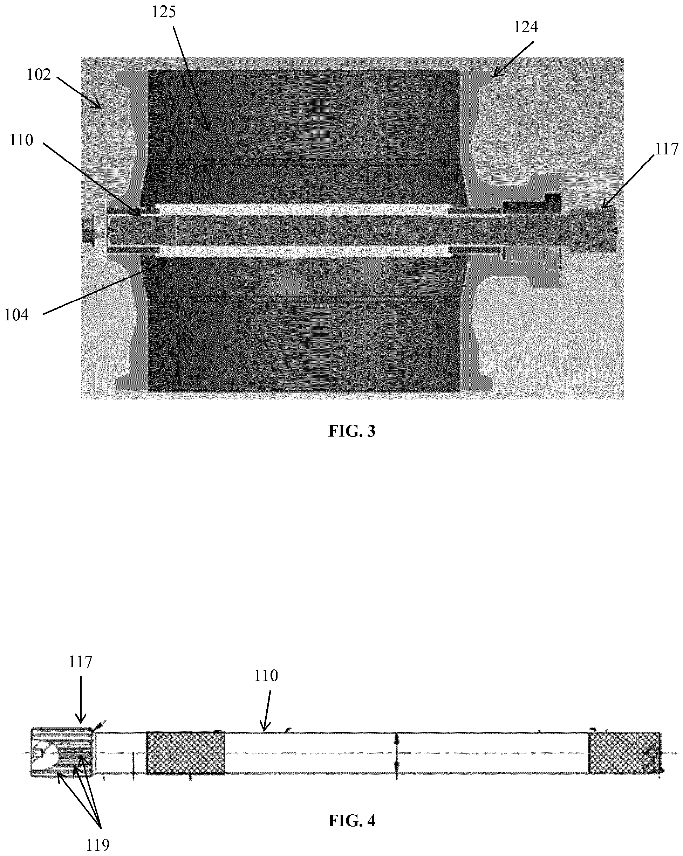

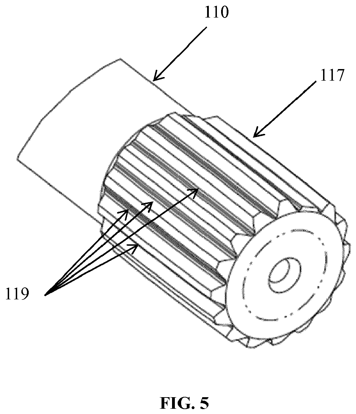

In one configuration, the interface for the transfer of power from the actuator 106 to the valve shaft 110 is a crowned splined interface 117. That is, the interface between the valve shaft 110 and the drive shaft 115 includes crowned splines and a corresponding engaging surface. As depicted in FIGs. 3, 4, and 5, the crowned splined interface 117 can include one of the valve shaft 110 and the drive shaft 115 including a plurality of projecting crowned splines 119 (shown in FIGs. 4 and 5) and a remaining one of the valve shaft 110 and drive shaft 115 includes a sleeve having an engaging surface for cooperatively engaging the plurality of crowned splines 119.

Although it is contemplated the crowned splines 119 can be disposed on either the valve shaft 110 or the drive shaft 115, it is contemplated in one configuration, the crowned splines 119 are formed on the valve shaft 110 and the corresponding engaging surface is formed in the sleeve or drive shaft 115 of the actuator 106.

In one configuration for imparting rotation of the valve shaft 110 (shown in FIGs. 1 and 2), the valve shaft 110 includes or is connected to a pinion 112 which is turn is driven by a rack 114, wherein the rack 114 is moved by any of a variety of mechanisms, such as a hydraulic actuator. The valve shaft 110 includes a plurality of crowned splines 119 and the drive shaft 115, rotated by the pinion 112, defines the sleeve having the engaging surface for cooperatively engaging the crowned splines 119.

In one configuration, the crowned splines 119 on the valve shaft 110 number between approximately 8 and approximately 24. It should be appreciated that the number of crowned splines 119 on valve shaft 110 is dependent on the circumference of valve shaft 110 and expected stress loads imparted onto crowned splines 119. That is for instance, a valve shaft 110 having a circumference of 2.215 inches, will also have approximately 16 crowned splines 119. Embodiments of valve shaft 110 provide that the entire circumference of valve shaft 110 need not include a crowned spline 119 adjacent to another crowned spline 119. Embodiments of valve shaft 110 provide for one or more spaces or gaps extending along the longitudinal axis of valve shaft 110 between a pair of crowned splines 119. Spaces or gaps between crowned splines 119 provide a mechanism for alignment of valve shaft 110 with pinion 112. Likewise, embodiments of pinion 112 include a corresponding tooth for engagement with spaces or gaps. The crowned splines 119 have a length along the valve shaft 110 between approximately 0.75 inches and approximately 1.0 inch. Embodiments of crowned splines 119 can also have a length along the valve shaft 110 between approximately 1.0 inches or less. Again, the length of the crowned splines 119 is dependent on expected stress loads imparted onto the crowned splines 119. For a valve shaft 110, the circumference can be between approximately 1.178 inches and approximately 3.252 inches.

The curvature or crown of the splines 119 can be defined be a radius of curvature swept about a plane that encompasses the longitudinal axis of the valve shaft 110, wherein the entire free edge of the crowned spline 119 is entirely defined by the radius of curvature. Alternatively, only the ends of each crowned spline 119 may be defined by a radius of curvature. Thus, between approximately 20% and approximately 100% of the length of the spline 119 can be defined by the radius of curvature.

Depending on the imposed radius of curvature, the height of the crowned spline 119 may vary from approximately 20% to the full height at the ends to the full height.

By employing the crowned splines 119 in the interface between the valve shaft 110 and the drive shaft 115 in the EGR 102, misalignment between the valve shaft 110 and the actuator 106, such as the rack 114 or pinion 112, is accommodated without increasing force on portions of the spline 119 that would otherwise prematurely wear the splines 119. In addition, the crowned splines 119 can be configured to accommodate manufacturing tolerances in the housing 124, the actuator 106 as well as the butterfly valve assembly 104.

The engaging surface, such as carried by the sleeve, is configured to provide corresponding crowned splines 119 with a length of approximately 0.812 inches or 13/16 inches.

The invention has been described in detail with particular reference to a presently preferred embodiment, but it will be understood that variations and modifications can be effected within the spirit and scope of the invention. The presently disclosed embodiments are therefore considered in all respects to be illustrative and not restrictive. The scope of the invention is indicated by the appended claims, and all changes that come within the meaning and range of equivalents thereof are intended to be embraced therein.

## Claims

1. An exhaust gas recirculation valve assembly (102) comprising:
(a) a housing (124) having an exhaust passage (125) for passing engine exhaust;
(b) a valve shaft (110) rotatably mounting to the housing (124) for rotation relative to the housing (124), the valve shaft (110) including a plurality of radially extending crowned splines (119); and
(c) a valve body (108) attached to the valve shaft (110) to rotate with the valve shaft (110) within the exhaust passage (125) to vary occlusion of the exhaust passage (125).

2. The exhaust gas recirculation valve assembly of Claim 1, further comprising a drive shaft (115) having a sleeve with a plurality of inwardly projecting splines (119) for cooperatively engaging the crowned splines.

3. The exhaust gas recirculation valve assembly of Claim 2, wherein the drive shaft (115) includes a pinion (112).

4. The exhaust gas recirculation valve assembly of Claim 3, further comprising a hydraulic actuator (106) configured to impart rotation of the pinion (112).

5. The exhaust gas recirculation valve assembly of Claim 4, further comprising a control valve controlling actuation of the hydraulic actuator.

6. The exhaust gas recirculation valve assembly of Claim 5, further comprising a solenoid for imparting a movement of the control valve.

7. The exhaust gas recirculation valve assembly of anyone of Claims 1 to 6, wherein a longitudinal axis of the shaft is transverse to the exhaust passage (125).

8. The exhaust gas recirculation valve assembly of anyone of Claims 1 to 7, wherein the valve body (108) is a butterfly valve (104).

9. An exhaust gas recirculation valve assembly (102)), in particular of anyone of Claims 1 to 8, comprising:
(a) a housing (124) having an exhaust passage (125) for passing engine exhaust;
(b) a valve shaft (110) rotatably mounting to the housing (124) for rotation relative to the housing (124), the valve shaft (110) carrying a valve body (108);
(c) a drive shaft (115); and
(d) a splined interface (117) between the valve shaft (110) and the drive shaft (115), one of the valve shaft (110) and the drive shaft (115) including a plurality of projecting crowned splines (119) and a remaining one of the valve shaft (110) and the drive shaft (115) including a sleeve having an engaging surface for cooperatively engaging the plurality of crowned splines (119).

10. The exhaust gas recirculation valve assembly of Claim 9, wherein the valve body (108) is a butterfly valve (104).

11. The exhaust gas recirculation valve assembly of Claim 9 or 10, wherein the valve shaft (110) includes the plurality of projecting crowned splines (119).

12. The exhaust gas recirculation valve assembly of Claim 9 or 10, wherein the drive shaft (115) includes the plurality of projecting crowned splines (119).

13. The exhaust gas recirculation valve assembly of anyone of Claims 9 to 12, wherein the drive shaft (115) includes a pinion (112).

14. An exhaust gas recirculation valve assembly (102), in particular of anyone of Claims 1 to 13, comprising:
(a) a housing (124) having an exhaust passage (125) for passing engine exhaust;
(b) a valve shaft (110) rotatably mounting to the housing (124) for rotation relative to the housing (124), the valve shaft (110) having an inner section located within the exhaust passage (125) and an outer section located outside the exhaust passage (125), the outer section including one of a plurality of radially outwardly extending crowned splines (119) and a sleeve having a plurality of radially inwardly extending splines (119);
(c) a valve body (108) attached to the valve shaft (110) to rotate with the valve shaft (110) within the exhaust passage (125) to vary occlusion of the exhaust passage (125);
(d) a drive shaft (115) having a remaining one of the plurality of radially outwardly extending crowned splines (119) and the sleeve having a plurality of radially inwardly extending splines (119) to define a splined interface (117) for imparting a rotation of the drive shaft (115) to the valve shaft (110).

15. The exhaust gas recirculation valve assembly of Claim 14, wherein the valve body (108) is a butterfly valve (104).
